# EUROPEAN PATENT SPECIFICATION

(11) **EP 0 349 174 B1**
(45) Date of publication and mention of the grant of the patent: **29.12.1993**
(21) Application number: 89306171.3
(22) Date of filing: 19.06.1989
(51) Int. Cl.: G01F 1/68, G01P 5/10

(54) **Thermal flux mass flowmeter**
Wärmefluss-Durchflussmesser
Débitmètre à flux thermique

(30) Priority: 27.06.1988 US 211891
(43) Date of publication of application: 03.01.1990
(73) Proprietor: Mickler, Brian Ellis, San Antonio, Texas 78201 (US)
(72) Inventor: Mickler, Brian Ellis, San Antonio, Texas 78201 (US)
(74) Representative: Dummett, Thomas Ian Peter

(56) References cited:
- EP-A- 0 048 359
- DE-A- 3 617 770
- FR-A- 2 451 022
- US-A- 4 245 503
- US-A- 4 517 838
- US-A- 4 578 996

## Description

This invention relates to a method for operating a thermal fluid flowmeter for measuring the velocity of a flowing fluid.

### BACKGROUND TO THE INVENTION

There are many different types of flowmeters for measuring velocity of a fluid. The term "fluid" as used in this application refers both to liquid and gas flow. One category of flowmeter is known as a "thermal" flowmeter. There are two general types of thermal flowmeters.

In one type, a flow pipe is employed with a passage for the fluid flow to be measured. One or more electric heaters are located in the flow or the sensor pipe. The heaters apply heat to the fluid as it flows through the sensor pipe. The temperature is measured at two different points in the sensor pipe. The difference in the temperature between the upstream and downstream point can be correlated to velocity.

In the second category of thermal mass flowmeters, a heater/temperature sensor is positioned on a boom and immersed into the flowing fluid stream. A circuit senses the temperature response of the sensor as a function of the mass fluid flow rate.

Each of these thermal flowmeters has in common the fact that the rate of heat flow into the fluid from the sensor fluid from the sensor is directly proportional to the mass flow rate of the fluid. The accuracy of these conventional thermal mass flowmeters is limited to a relatively narrow range of flow velocities. With low velocities, accuracy is limited by spurious heat losses due to convection and leakage into the environment. For high velocities, accuracy is limited by the finite thermal resistance of the sensor element or elements.

In order to avoid the high velocity range limitation, a common technique is to use a main pipe within which are contained laminar flow elements. These laminar flow elements are arranged to produce a certain pressure drop for the desired range of velocities to be measured. The pressure difference upstream and downstream of the laminar flow elements is proportional to the volume flow rate of the fluid to be measured.

A sensor pipe branches off from the main pipe and reenters downstream. This sensor pipe carries heating elements and sensors. A much smaller fluid flow will flow through the sensor pipe than the main pipe. The velocity of the flow in the sensor pipe is measured, it being proportional to the main velocity flowing through the main pipe. Even though this is workable, flow rates outside of the design range can still not be accurately measured without modifying the laminar flow elements.

In U.S. Patent 4,517,838, Wachi et al. , May 21, 1985, a heat conducting case is shown. The case has a fine groove in a sensor pipe. Heating means is mounted in the fine groove so as to measure the fluid flow. The small size of the sensor pipe necessitated by such a fine groove restricts the high fluid velocity measurement capability of the flowmeter.

DE 3617770 discloses a flowmeter of the above mentioned first type. While it is true that heat generated by sensors (3) and (4) may be absorbed by conduit (7), the response of the configuration shown may not be monotonic over the full range of mass fluid velocities.

Similarly it will be seen the European Patent Application number EP-A0048359 describes a centrally heated temperature dependent resistor (1) disposed on a mounting plate (3) parallel to the fluid flow. The resistance is measured and converted into temperature, and the velocity of the fluid flow is derived therefrom. This apparatus does not have a heat sink mounted a pre-determined distance from the sensor perpendicular to the line of flow of the fluid nor is there any reference to the need for the thermal flux to flow perpendicularly to the line of flow of the fluid.

PCT Application number WO-A-87/00917 describes a heated temperature sensitive resistor (11) disposed on a substrate (18) positioned substantially parallel to the longitudinal centre line (15) of a bore (14) created by upper (12) and lower (13) mating portions of a thermally conductive housing. An additional temperature sensitive reference resistor 20 is also disposed on substrate (18) in the line of flow with sensor (11), and power is supplied to sensor (11) to maintain a given temperature relationship with the reference sensor (18). However, because the sensors are not thermally isolated from each other, the response of this apparatus is not monotonic over the full range of mass flow velocities. The portions 12 and 13 of the housing act primarily to provide physical protection to the sensitive elements of the sensors and as a heat sink for the other electrical components carried outside the duct. No reference is made to the need for the thermal flux to flux normally to the line of flow of the fluid nor to selection of the gap between sensor 11 and portions 12 and 13.

US Patent Specification number 4578996 describes two temperature sensitive resistor wires (18) and (19) positioned in an upstream\downstream relationship parallel to each other and across the direction of flow. A heating coil (17) is placed in close proximity to resistor (18). By measuring the relationship between the resistances of the resistance wires (18) and (19), an output signal corresponding to the amount of gas flow is extracted. However, because heat sinks are not employed, the response of the apparatus is sluggish and elaborate means are disclosed in order to compensate for this deficiency. Furthermore, the heat flux flows parallel to and not normal to the line of fluid flow.

We have devised a method for operating a thermal fluid flowmeter which reduces the above problems. In the method of the invention a sensor is placed in the main flow of the fluid and a heat sink is placed a pre-determined distance away from the sensor in a line perpendicular to the line of flow of fluid between the sensor and the heat sink. The sensor is capable of generating heat when supplied with electrical power and the thermal flux generated flows substantially unimpededly from the sensor to the heat sink, which absorbs the heat. This thermal flux is modulated by the flowing fluid. Circuitry measures the temperature rise of the sensor and computes from that measurement the velocity of the flowing fluid. I have found that, by locating the sensor and heat sink in this configuration and selecting the gap between the sensor and the heat sink so that the thermal flux flows between the sensor and heat sink substantially normal to the line of flow of the fluid, surprisingly, the temperature rise of the sensor can be accurately related to the fluid velocity over a wide range of velocities and fluid types.

### SUMMARY OF THE INVENTION

Accordingly, the present invention provides a method for measuring the velocity of a flowing fluid by the use of a device which comprises a heat sensor in contact with the fluid which sensor emits a thermal flux upon the passage of an electrical current through the sensor and computing the temperature increase of the sensor over the ambient temperature of the flowing fluid and computing from the temperature increase and the power supplied the velocity of the flowing fluid, wherein:
a. the device comprises a sensor (11, 19) in contact with the flowing fluid and a heat sink (25) also in contact with the flowing fluid and spaced apart from the sensor (11, 19) so as to receive thermal flux from the sensor, the heat sink (25) being located a pre-determined distance from the sensor (11, 19) in a direction substantially normal to the line of flow of the fluid; and in that
b. the distance between the sensor and heat sink is chosen so that the thermal flux generated by the sensor (11, 19) flows substantially unimpededly from the sensor (11, 19) to the heat sink (25), which absorbs the thermal flux, and substantially normal to the line of flow of the fluid, said thermal flux being modulated by the flowing fluid.

Preferably, the sensor has a resistance which varies with temperature, for example it is a wire coil or wave shaped resistance, and the difference between the resistances at ambient and operating temperatures is used to indicate the temperature rise of the sensor. This is used, with the power applied to the sensor, to calculate the velocity of the fluid as detailed below. It is also preferred that the spaces between the sensor(s) and their co-operating heat sink(s) is substantially unobstructed so that the thermal flux can flow unimpeded between them.

The invention also provides a thermal flux meter suitable for use in a preferred embodiment of the invention, which apparatus comprises:
a. a reference sensor (37) and an active sensor (35), each adapted to be placed in the flowing fluid, the sensors (37, 35) being capable of generating thermal flux when supplied with electrical power, the sensors (37, 35) being spaced apart from each other in a direction substantially perpendicular to the intended line of the flow of the fluid;
b. three heat sinks (39, 41, 43), one of the heat sinks (41) being positioned between the sensors (37, 35), another of the heat sinks (43) being positioned on the opposite side of the reference sensor (37), and the third heat sink (39) being positioned on the opposite side of the active sensor (35), each heat sink (39, 41 and 43) being spaced substantially the same distance from its adjacent sensor (37 or 35) in directions substantially perpendicular to the intended line of flow of the fluid, the distances between the active sensor (35) and its associated heat sinks (41 and 39) being selected so that the thermal flux generated by the active sensor (35) flows substantially unimpededly from the active sensor (35) to the associated heat sinks (41 and 39) and normal to the line of intended flow of the fluid and is modulated by the flow of the fluid;
c. means for supplying electrical power to the active sensor (35) to cause a thermal flux to flow from the active sensor (35) to the heat sinks (39 and 41) on each side of the active sensor (35), and for supplying electrical power to the reference sensor (37) at a substantially lower level than the power supplied to the active sensor (35) to cause a thermal flux to flow from the reference sensor (37) to the heat sinks (41 and 43) on each side of the reference sensor (37); and
d. means for measuring the temperatures of the active sensor (35) and of the reference sensor (37), for subtracting the temperature of the reference sensor (37) from that of the active sensor (35), means for measuring the power supplied to the active sensor, and means for computing the velocity of the flowing fluid from the temperature difference and the power supplied to the active sensor.

### DESCRIPTION OF THE DRAWINGS

Figure 1 is a schematic representation of a first embodiment of the invention;
Figure 2 is a schematic representation of a second embodiment of the invention;
Figure 3 is a schematic representation of a third embodiment of the invention; and
Figure 4 is a schematic view illustrating in exploded form one of the sensors for use in the invention.

### DESCRIPTION OF THE PREFERRED EMBODIMENTS OF THE INVENTION

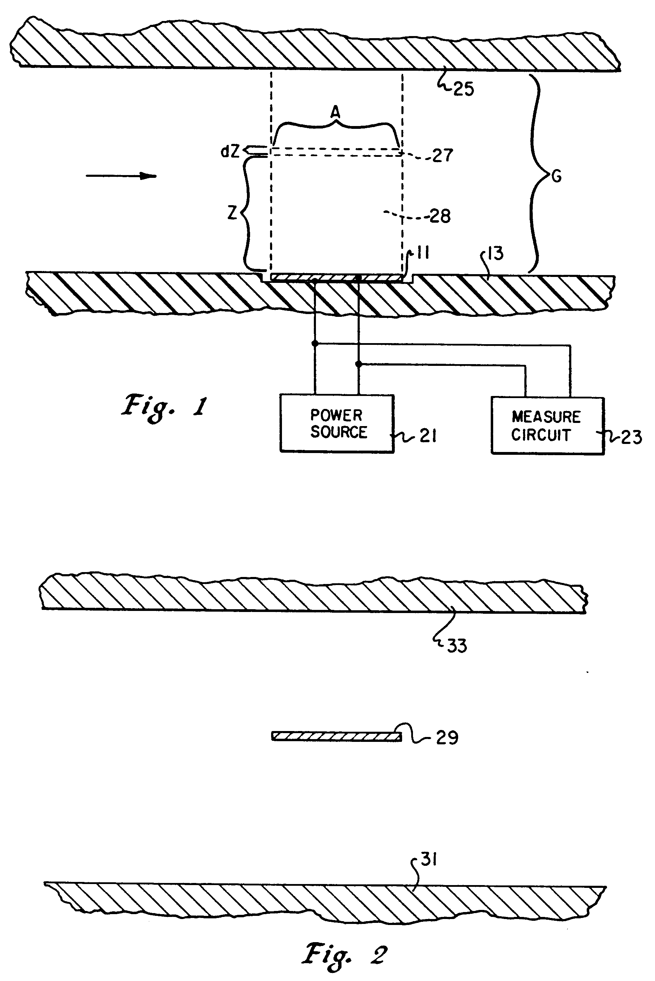

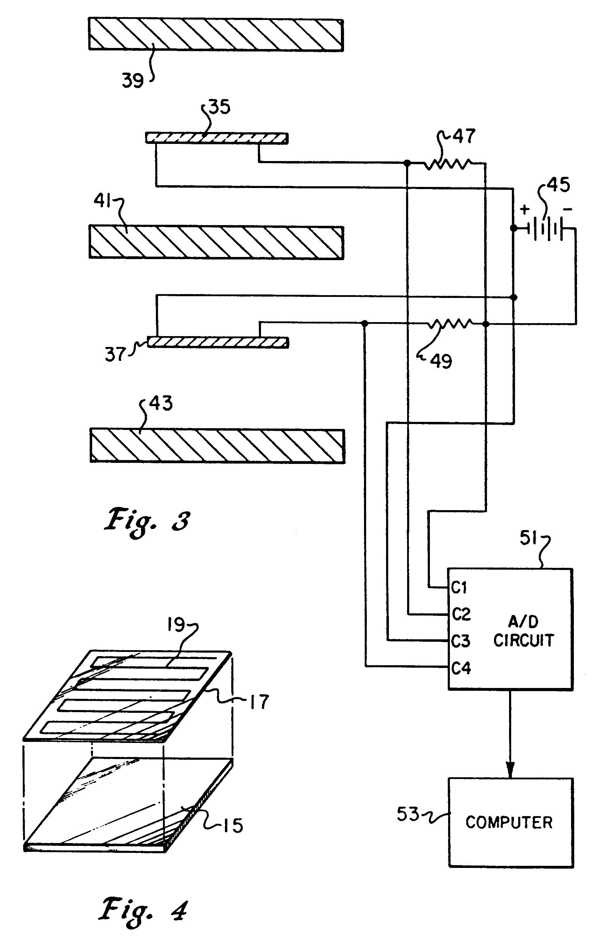

With reference to Figure 1, a combination heat source/temperature sensor foil 11 is shown. The sensor 11 is mounted in an insulator 13. Sensor 11 is preferably a conventional type element that is normally used to record temperatures. As illustrated in Figure 4, it has a thin insulation layer or substrate 15 of material, for example that sold under the Trade Mark Kapton. The substrate 15 is coated or clad with a thin layer 17 of conductive metal. The metal layer is etched into a sinuous coil pattern 19. Fine very thin lines are cut into the metal layer 17 to create the coil 19. The coil 19 and the substrate 15 are flat surfaces. Sensors of this general type are conventionally available.

In this invention, the coil 19 of the sensor 11 is connected to a power source 21, as illustrated in Figure 1, for radiating heat from the sensor 11. Power source 21 provides DC power to flow through the coil 19 (Figure 4) of the sensor 11. The coil 19 of the sensor 11 generates heat, which radiates from the sensor. A measuring circuit 23 measures the power supplied, and thus obtains an indication of the temperature.

A heat sink 25 is mounted across from the sensor 11. Heat sink 25 is of a metal that readily conducts heat and thus attracts and absorbs the heat generated from the sensor 11. The surface of the heat sink 25 is flat and parallel with the opposed face of sensor 11. The fluid flow is perpendicular to lines normal to the sensor 11 and heat sink 25 and the space between the opposed faces of the sensor 11 and the heat sink 25 is substantially free from any obstruction.

For the purposes of analyzing and describing the behaviour, an incremental volume 27 of the fluid is shown located within an active volume 28 between the sensor 11 and heat sink 25. The following definitions apply:
z = distance between sensor 11 and incremental volume 27;
dz = thickness of the incremental volume 27;
A = area of the incremental volume 27;
Tₒ = temperature of the sensor 11;
Tₐ = ambient temperature of heat sink 25 and the fluid flowing through the flowmeter;
T = temperature of the fluid within the incremental volume 27;
Q = heat;
C = thermal capacity or specific heat of the fluid (BTU/lb.°F);
D = density of the fluid (lb/cu in);
K = thermal conductivity of the fluid (BTUin/hr.sq.ft.°F);
d = differential operator;
t = time;
V = average molecular velocity in feet per minute (fpm) of the fluid flowing past sensor 11; and
W = power in watts being furnished to the fluid by the sensor 11.

A constant fluid velocity profile is assumed across the gap between the sensor 11 and the heat sink 25. The heat Q1 contained in the incremental volume 27 is proportional to the thermal capacity C of the fluid, the mass of the fluid (DAdz), and its temperature T as follows:

$\text{Q1 = CDTAdz}$

The rate of heat storage in incremental volume 27 is dQ1/Dt minus the rate at which heat is being removed from the element by fluid flowing at velocity V, as follows:

${\text{dQ1/dt = CDAdz(dT/dt) - CDAdz(T-T}}_{\text{a}} {\text{)V = CDAdz[dT/dt - (T-T}}_{\text{a}} \text{) V]}$

The rate of heat flow or flux from sensor 11 into incremental volume 27 is proportional to the area of the surface A, the fluid conductivity K, and the outward normal gradient of the temperature dT/dz as follows:

$\text{dQ2/dt = -KAdT/dz}$

The rate of heat flow out of incremental volume 27 is as follows:

$\text{dQ3/dt = dQ2/dt + d/dz(dQ2/dt)dz = -KAdT/dz - d/dz(KAdT/dz)dz}$

By conservation of heat:

${\text{dQ2/dt - dQ3/dt = dQ1/dt; -KAdT/dz + KAdT/dz + d/dz(KAdT/dz)dz = CDAdz[dT/dt - (T-T}}_{\text{a}} \text{) V]; and}$
${\text{d²T/dz² = CD[dT/dt - (T-T}}_{\text{a}} \text{) V]/K}$

In the steady state;

$\text{dT/dt = 0, and}$
${\text{d²T/dz² = CDV(-T + T}}_{\text{a}} \text{)/K}$

This differential equation, along with the following boundary conditions, uniquely describes the thermal environment within the active volume 28 between the sensor 11 and heat sink 25. 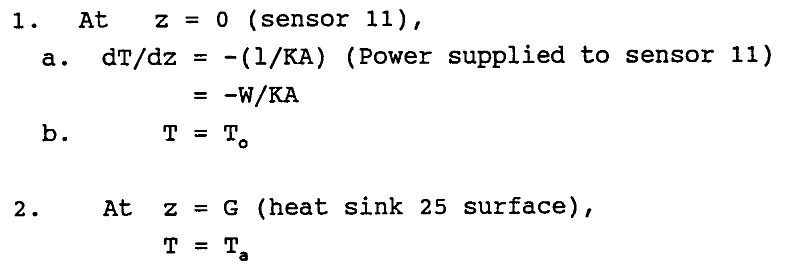
Hence the steady state equation describing the temperature T for any location z within the active volume 28 is:

${\text{T = T}}_{\text{a}} \text{+ [(G-z)W/KA]eEXP [-(G-z) SQRT (CDV/K)]}$

The steady state equation describing the temperature of the sensor at z = 0 is:

${\text{T}}_{\text{o}} {\text{= T}}_{\text{a}} \text{+ [GW/KA]eEXP (-(G) SQRT (CDV/K)]}$

Therefore, the temperature rise ${\text{TR = T}}_{\text{o}} {\text{- T}}_{\text{a}}$ of the sensor 11 above ambient can be expressed as:

$\text{TR = (CONSTANT1*G*W/A)*eEXP[-G*SQRT (CONSTANT2*V)],}$

where CONSTANT1 and CONSTANT2 are determined solely by the properties of the fluid. For the units of measurement chosen in this analysis:

$\text{CONSTANT1 = 482.4/K, and CONSTANT2 = 103,000 (CD/K).}$

This equation has the remarkable property that the overall variation and sensitivity of TR (temperature rise of the sensor 11 over the ambient temperature of the flowing fluid) to fluid velocity can be dictated for any desired fluid type or range of velocities simply by specifying the gap dimension G.

In the examples listed below, rather than the preferred etched sensor 11 described above, a prototype sensor was used. It had a coil of sixty turns of 0.0018 inch diameter annealed copper wire sandwiched between two brass disks.

### Example 1: For

P = 0.4 Watts
G = 0.025 Inches
A = 0.3 Sq. Inches
FLUID TYPE = AIR @ STD. TEMP & PRESSURE
TR at V = 0 fpm will be 100.5°F;
TR at V = 20 fpm will be 74.5°F; and
TR at V = 5000 fpm will be 0.8°F.

### Example 2: For

P = 2 Watts
G = 0.04 Inches
A = 0.3 Sq. Inches
FLUID TYPE = WATER
TR at V = 0 fpm will be 30.99°F;
TR at V = 0.1 fpm will be 21.23°F; and
TR at V = 20 fpm will be 0.7°F.

Both of these examples illustrate the high resolution available at low flow rates for both air and water, as well as the capability of acquiring measurable data at high flow rates using the present invention. Because the average temperature rise of the fluid in the active volume of the invention at zero velocity is very small compared to conventional thermal flowmeters, posture and convection errors are negligible.

The second embodiment of Figure 2 illustrates how to minimize spurious heat losses due to the insulating surface 13 of Figure 1. In Figure 2, the sensor 29 is the same as the sensor 11 of Figure 1, however, it is suspended equidistant between two heat sinks 31, 33. The fluid flows on both side of the sensor 29. The heat sink surfaces 31, 33, are at the same ambient temperature as the temperature of the flowing fluid. The area of both faces or sides of the sensor 29 is used in calculating the temperature/fluid velocity relationship. Because of the thinness of the substrate of the sensor 29, substantially equal amounts of heat will flow in both directions from the sensor 29.

Figure 3 illustrates a third embodiment. In this embodiment, one can compensate for the varying temperatures of the fluid entering the thermal flux fluid flowmeter. In this embodiment, sensor 35 is the measuring or active sensor, similar to sensor 11 or sensor 29 of Figures 1 and 2. Sensor 35 is located equidistant between two heat sinks 39, 41.

A second sensor 37 is spaced equidistant between the heat sink 41 and another heat sink 43. Sensor 37 is of the same construction as sensor 35, however, it will be a reference sensor. The reference sensor 37 has thermal properties identical to the active sensor 35, but the power employed in making the reference sensor 37 temperature measurement is set to less than one hundredth of that used in the active sensor 35. In this case, DT is the temperature of the active sensor 36 minus the temperature of the reference sensor 37.

Referring still to Figure 3, a battery 45 or DC power source has its positive leads connected to one side of the coils of the sensors 35, 37. The active sensor 35 has the other end of its coil connected to a resistor 47. The reference sensor 37 has its other side connected to a resistor 49. The values of the resistors 47 and 49 are selected so that the heat output from the reference sensor 37 is only a fraction, for example about 1/100 the heat output from the active sensor. In the specific example described resistor 49 is a two hundred ohm resistor and resistor 47 is a ten ohm resistor.

The opposite sides of the resistors 47, 49 are connected to the negative side of the power source 45. The negative side of the power source 45 is also connected to a terminal C1 of a conventional analog voltage-to-digital data acquisition system or converter 51. The terminal C2 of the A/D converter 51 is connected between resistor 47 and the active sensor 35. The terminal C3 is connected to the positive side of the battery 45. The terminal C4 is connected between resistor 49 and the reference sensor 37. The A/D converter 51 is connected to a conventional computer 53. The A/D converter 51 collects the analog voltages at its terminal C1, C2, C3, and C4 and supplies digital data to the computer 53 for calculating the velocities.

In an embodiment of Figure 3, the gaps between heat sinks 39 and 41 and between heat sinks 41 and 43 are selected to be .025 inches. The values of the resistors 47, 49 yield about 0.4 watts to the active sensor 35 and about one hundredth of that value to the reference sensor 37. The following equations are programmed into the computer S3 to yield the desired quantities:
Resistance of active sensor 35:

${\text{R}}_{\text{a}} \text{= 10 (C3-C2)/(C2-C1) ohms}$

Power being delivered to active sensor 35:

$\text{W = (C3-C2) (C2-C1)/lO watts}$

Resistance of reference sensor 37:

${\text{R}}_{\text{r}} \text{= 200 (C3-C4)/(C4-C1) ohms}$

Temperature above ambient of active sensor 35:

${\text{DT}}_{\text{a}} {\text{= 458.01 (R}}_{\text{a}} {\text{{with power applied} - R}}_{\text{a}} {\text{@ ambient temperature)/(R}}_{\text{a}} \text{@ ambient temperature) degrees F}$

Temperature above ambient of reference sensor 37:

${\text{DT}}_{\text{r}} {\text{= 458.01 (R}}_{\text{r}} {\text{{with power applied} - R}}_{\text{r}} {\text{@ ambient temperature)/(R}}_{\text{r}} \text{@ ambient temperature) degrees F}$

Temperature rise:

${\text{TR = DT}}_{\text{a}} {\text{- DT}}_{\text{r}} \text{degrees F}$

In general, the expression for apparent fluid velocity is:

$\text{V = (K/lO3OOOCD) [LOG (482.4GW/AKTR)/G]²}$

Using the following values for the thermal properties of air at 70°F and one atmosphere:
C = .24 BTU/lb°F
D = .0000464 lb/cu in
K = .16 BTU. in/hr sq ft °F
and the design constants chosen for the realization of the present invention as an anemometer are:
A = .4 sq in
G = .025 in
The specific apparent fluid velocity equation programmed is:

$\text{V = 2230 [LOG(188W/TR)]²}$

The resulting output velocity is linear to within five percent over inputs spanning a range from two feet per minute to two thousand feet per minute, and the zero stability and posture error for this embodiment of the invention is less than plus or minus 0.5 fpm over an ambient temperature range of 70-110°F. Even better linearity is possible by making further refinements to the preceding algorithms to correct for such factors as the measurable series and shunt thermal impedances of the active sensor 35, as well as deviations from the assumed constant velocity profile of the fluid due to viscosity or other factors.

The invention has significant advantages. The thermal mass flowmeter of this invention improves the high and low velocity limitations of conventional mass flowmeters by employing a unique thermal flux modulation technique to enable the accommodation of a wide range of fluid types and velocities.

While the invention has been shown in only three of its forms, it should be apparent to those skilled in the art that it is not so limited but is susceptible to various changes without departing from the scope of the invention.

## Claims

1. A method for measuring the velocity of a flowing fluid by the use of a device which comprises a heat sensor in contact with the fluid which sensor emits a thermal flux upon the passage of an electrical current through the sensor and computing the temperature increase of the sensor over the ambient temperature of the flowing fluid and computing from the temperature increase and the power supplied the velocity of the flowing fluid, wherein:
a. the device comprises a sensor (11, 19) in contact with the flowing fluid and a heat sink (25) also in contact with the flowing fluid and spaced apart from the sensor (11, 19) so as to receive thermal flux from the sensor, the heat sink (25) being located a pre-determined distance from the sensor (11, 19) in a direction substantially normal to the line of flow of the fluid; and in that
b. the distance between the sensor and heat sink is chosen so that the thermal flux generated by the sensor (11, 19) flows substantially unimpededly from the sensor (11, 19) to the heat sink (25), which absorbs the thermal flux, and substantially normal to the line of flow of the fluid, said thermal flux being modulated by the flowing fluid.

2. A method as claimed in claim 1, wherein the space between the heat sink and the sensor is substantially free from obstructions.

3. A method as claimed in either of claims 1 or 2, wherein the sensor (11) and the heat sink (25) have opposing surfaces that are substantially parallel to each other.

4. A method as claimed in any one of the preceding claims, wherein the sensor (11) comprises a resistive element (19), whose plane is substantially parallel to the opposed face of the heat sink (25).

5. A method as claimed in claim 4, wherein the sensor (11) comprises a substrate (15) clad with a metal layer which defines a resistive element (19).

6. A method as claimed in any one of the preceding claims, wherein the device comprises a sensor (29) and a pair of heat sinks (31, 33) positioned substantially equidistantly to either side of the sensor (29) in directions substantially perpendicular to the line of flow of the fluid.

7. A method as claimed in any one of claims 1 to 5, wherein the device comprises: a reference sensor (37) and an active sensor (35), each placed in the flowing fluid, the sensors (37, 35) being capable of generating thermal flux when supplied with electrical power, the sensors (37, 35) being spaced apart from each other in a direction substantially perpendicular to the line of the flow of the fluid; three heat sinks (39, 41, 43), one of the heat sinks (41) being positioned between the sensors (37, 35), another of the heat sinks (43) being positioned on the opposite side of the reference sensor (37), and the third heat sink (39) being positioned on the opposite side of the active sensor (35), each heat sink (39, 41 and 43) being spaced substantially the same distance from its adjacent sensor (37 or 35) in directions substantially perpendicular to the line of flow of the fluid; electrical power is supplied to the active sensor (35) to cause a thermal flux to flow from the active sensor (35) to the heat sinks (39 and 41) on each side of the active sensor (35); electrical power is supplied to the reference sensor (37) at a substantially lower level than the power supplied to the active sensor (35) to cause a thermal flux to flow from the reference sensor (37) to the heat sinks (41 and 43) on each side of the reference sensor (37); the temperatures of the active sensor (35) and of the reference sensor (37) are measured, the temperature of the reference sensor (37) is subtracted from that of the active sensor (35); and the velocity of the flowing fluid is computed from the temperature difference and the power supplied to the active sensor.

8. A thermal flux meter suitable for use in the method as claimed in claim 7, comprising:
a. a reference sensor (37) and an active sensor (35), each adapted to be placed in the flowing fluid, the sensors (37, 35) being capable of generating thermal flux when supplied with electrical power, the sensors (37, 35) being spaced apart from each other in a direction substantially perpendicular to the intended line of the flow of the fluid;
b. three heat sinks (39, 41, 43), one of the heat sinks (41) being positioned between the sensors (37, 35), another of the heat sinks (43) being positioned on the opposite side of the reference sensor (37), and the third heat sink (39) being positioned on the opposite side of the active sensor (35), each heat sink (39, 41 and 43) being spaced substantially the same distance from its adjacent sensor (37 or 35) in directions substantially perpendicular to the intended line of flow of the fluid, the distances between the active sensor (35) and its associated heat sinks (41 and 39) being selected so that the thermal flux generated by the active sensor (35) flows substantially unimpededly from the active sensor (35) to the associated heat sinks (41 and 39) and normal to the line of intended flow of the fluid and is modulated by the flow of the fluid;
c. means for supplying electrical power to the active sensor (35) to cause a thermal flux to flow from the active sensor (35) to the heat sinks (39 and 41) on each side of the active sensor (35), and for supplying electrical power to the reference sensor (37) at a substantially lower level than the power supplied to the active sensor (35) to cause a thermal flux to flow from the reference sensor (37) to the heat sinks (41 and 43) on each side of the reference sensor (37); and
d. means for measuring the temperatures of the active sensor (35) and of the reference sensor (37), for subtracting the temperature of the reference sensor (37) from that of the active sensor (35), means for measuring the power supplied to the active sensor, and means for computing the velocity of the flowing fluid from the temperature difference and the power supplied to the active sensor.

## Patentansprüche

1. Verfahren zum Messen der Geschwindigkeit eines fließenden Strömungsmittels durch die Verwendung einer Vorrichtung, welche einen Wärmesensor aufweist, der in Kontakt mit dem Strömungsmittel steht, welcher Sensor einen Wärmestrom aufgrund eines Durchgangs von elektrischem Strom durch den Sensor ausschickt, wobei der Temperaturanstieg des Sensors über die Umgebungstemperatur der fließenden Strömung gemessen und aus dem Temperaturanstieg und der zugeführten Energie die Geschwindigkeit des fließenden Strömungsmittels berechnet wird, wobei
a. die Vorrichtung einen Sensor (11, 19) umfaßt, der in Kontakt mit dem fließenden Strömungsmittel steht und eine Wärmesenke (25), die auch im Kontakt mit dem Strömungsmittel und mit Abstand von dem Sensor (11, 19) derart angeordnet ist, daß sie einen Wärmestrom von dem Sensor empfängt, wobei die Wärmesenke (25) mit einem vorbestimmten Abstand vom Sensor (11, 19) angeordnet ist, in einer Richtung, welche im wesentlichen senkrecht zur Stromlinie des Strömungsmittels angeordnet ist; und wobei
b. der Abstand Zwischen dem Sensor und der Wärmesenke derart gewählt ist, daß der vom Sensor (11, 19) erzeugte Wärmestrom im wesentlichen ungehindert vom Sensor (11, 19) zu der den Wärmestrom absorbierenden Wärmesenke (25) fließt, und zwar im wesentlichen senkrecht zu der Stromlinie des Strömungsmittels, wobei der Wärmestrom durch das fließende Strömungsmittel verändert wird.

2. Verfahren nach Anspruch 1,
bei dem der Raum zwischen der Wärmesenke und dem Sensor im wesentlichen frei von Behinderungen ist.

3. Verfahren nach einem der Ansprüche 1 oder 2,
bei dem der Sensor (11) und die Wärmesenke (25) einander gegenüberliegende Oberflächen haben, die im wesentlichen parallel zueinander liegen.

4. Verfahren nach einem der vorhergehenden Ansprüche,
bei dem der Sensor (11) ein Widerstandselement (19) umfaßt, dessen Ebene im Wesentlichen parallel zu der gegenüberliegenden Oberfläche der Wärmesenke (25) liegt.

5. Verfahren nach Anspruch 4,
bei dem der Sensor (11) eine Trägerplatte mit einer Metallschicht umfaßt, welche das Widerstandselement (19) bildet.

6. Verfahren nach einem der vorhergehenden Ansprüche,
bei dem die Vorrichtung einen Sensor (29) und ein Paar von Wärmesenken (31, 33) umfaßt, die im wesentlichen mit gleichem Abstand zu beiden Seiten des Sensors angeordnet sind in Richtungen, welche im wesentlichen senkrecht zu der Stromlinie des Strömungsmittels verlaufen.

7. Verfahren nach einem der Ansprüche 1 bis 5,
bei dem die Vorrichtung umfaßt:
Einen Bezugssensor (37) und einen aktiven Sensor (35), deren jeder im fließenden Strömungsmittel angeordnet ist, wobei die Sensoren (37, 35) zur Erzeugung eines Wärmestroms unter Zufuhr von elektrischer Energie ausgebildet sind, wobei die Sensoren (37, 35) mit Abstand voneinander in einer Richtung angeordnet sind, welche im wesentlichen senkrecht zu der Stromlinie des Strömungsmittels verläuft; drei Wärmesenken (39, 41, 43), wobei eine der Wärmesenken (41) zwischen den Sensoren (37, 35) angeordnet ist, eine andere der Wärmesenken (43) auf der gegenüberliegenden Seite des Bezugssensors (37) und die dritte Wärmesenke (39) auf der gegenüberliegenden Seite des aktiven Sensors (35), wobei jede Wärmesenke (39, 41 und 43) im wesentlichen mit gleichem Abstand von ihrem benachbarten Sensor (37 oder 35) angeordnet ist in Richtungen, welche im wesentlichen senkrecht zu der Stromlinie des Strömungsmittels verlaufen; wobei elektrische Energie dem aktiven Sensor (35) zur Erzeugung eines Wärmestroms zugeführt wird, damit dieser von dem aktiven Sensor (35) zu den Wärmesenken (39 und 41) auf jeder Seite des aktiven Sensors (35) fließt; wobei elektrische Energie dem Bezugssensor (37) auf einem im wesentlichen niedrigeren Niveau zugeführt wird als die elektrische Energie, die dem aktiven Sensor (35) zugeführt wird zur Erzeugung eines Wärmestroms, der vom Bezugssensor (37) den Wärmesenken (41 und 43) auf beiden Seiten des Bezugssensors zuströmt; wobei die Temperaturen des aktiven Sensors (35) und des Bezugssensors (37) gemessen werden und die Temperatur des Bezugssensors von der des aktiven Sensors subtrahiert wird; und wobei die Geschwindigkeit des fließenden Strömungsmittels aus der Temperaturdifferenz und der dem aktiven Sensor zugeführten Energie berechnet wird.

8. Thermischer Strömungsmesser zur Verwendung bei dem Verfahren nach Anspruch 7, umfassend
a. einen Bezugssensor (37) und einen aktiven Sensor (35), deren jeder zur Anordnung in dem fließenden Strömungsmittel ausgebildet ist, wobei die Sensoren (35, 37) zur Erzeugung eines Wärmestroms bei Zufuhr von elektrischer Energie ausgebildet sind, wobei die Sensoren (37, 35) mit Abstand voneinander in einer Richtung angeordnet sind, welche im wesentlichen senkrecht zu der gewünschten Stromlinie des Strömungsmittels verläuft;
b. drei Wärmesenken (39, 41, 43), wobei eine der Wärmesenken (41) zwischen den Sensoren (37, 35), eine andere der Wärmesenken (43) auf der gegenüberliegenden Seite des Bezugssensors (37) und die dritte Wärmesenke (39) angeordnet ist auf der gegenüberliegenden Seite des aktiven Sensors (35), wobei alle Wärmesenken (39, 41 und 43) mit im wesentlichen gleichem Abstand von ihrem benachbarten Sensor (37 oder 35) angeordnet sind, in Richtungen, welche im wesentlichen senkrecht zu der gewünschten Stromlinie des Strömungsmittels verläuft, wobei die Abstände zwischen dem aktiven Sensor (35) und seinen zugehörigen Wärmesenken (41 und 39) so ausgewählt sind, daß der vom aktiven Sensor erzeugte Wärmestrom im wesentlichen ungehindert von dem aktiven Sensor (35) zu den zugehörigen Wärmesenken (41 und 39) strömt, und zwar senkrecht zu der gewünschten Stromlinie des Strömungsmittels und durch den Fluß des Strömungsmittels verändert wird;
c. Mittel zur Zufuhr elektrischer Energie an den aktiven Sensor (35), damit ein Wärmestrom vom aktiven Sensor (35) zu den Wärmesenken (39 und 41) auf beiden Seiten des aktiven Sensors (35) fließt, und Mittel zum Zuführen elektrischer Energie an den Bezugssensor (37) auf einem im wesentlichen niedrigeren Niveau als die Energie, die dem aktiven Sensor (35) zugeführt wird, um zu veranlassen, daß ein Wärmestrom vom Bezugssensor (37) zu den Wärmesenken (41 und 43) auf beiden Seiten des Bezugssensors (37) strömt; und
d. Mittel zum Messen der Temperaturen des aktiven Sensors (35) und des Bezugssensors (37), Mittel zum Subtrahieren der Temperatur des Bezugssensors (37) von der des aktiven Sensors (35), Mittel zum Messen der dem aktiven Sensor zugeführten Energie und Mittel zum Berechnen der Geschwindigkeit des fließenden Strömungsmittels aus der Temperaturdifferenz und der dem aktiven Sensor zugeführten Energie.

## Revendications

1. Méthode pour mesurer la vitesse d'un fluide en écoulement par l'emploi d'un dispositif qui comprend un capteur thermique en contact avec le fluide, ce capteur émettant un flux thermique lorsqu'il est traversé par un courant électrique, pour calculer l'élévation de sa propre température au-dessus de la température ambiante du fluide en écoulement et pour calculer la vitesse du liquide en écoulement d'après l'augmentation de la température et le courant fourni, caractérisée en ce que :
a) le dispositif comprend un capteur (11 et 19) en contact avec le fluide en écoulement et un puits thermique (25) également en contact avec ce fluide et disposé à l'écart du capteur (11 et 19) de façon à recevoir un flux thermique du capteur, le puits de chaleur (25) étant placé à une distance prédéterminée du capteur (11 et 19) dans un sens essentiellement perpendiculaire à la ligne d'écoulement du fluide, et en ce que
b) la distance entre le capteur et le puits thermique est choisie de façon que le flux thermique produit par le capteur (11 et 19) s'écoule sensiblement sans obstacles du capteur (11 et 19) au puits de chaleur (25), lequel absorbe le flux thermique, et qu'il s'écoule dans un sens essentiellement perpendiculaire à la ligne d'écoulement du fluide, ledit flux thermique étant modulé par le fluide en écoulement.

2. Méthode selon la revendication 1, caractérisée en ce que l'espace entre le puits de chaleur et le capteur est essentiellement dégagé d'obstacles.

3. Méthode selon l'une ou l'autre des revendications 1 et 2, caractérisée en ce que le capteur (11) et le puits de chaleur (25) possèdent des surfaces opposées sensiblement parallèles entre elles.

4. Méthode selon l'une quelconque des revendications ci-dessus, dans laquelle le capteur (11) comprend un élément résistant (19) dont le plan est sensiblement parallèle à la face opposée du puits de chaleur (25).

5. Méthode selon la revendication 4, caractérisée en ce que le capteur (11) comprend un substrat (15) revêtu d'une couche de métal qui délimite un élément résistant (19).

6. Méthode selon l'une quelconque des revendications précédentes, caractérisée en ce que le dispositif comprend un capteur (29) et une paire de puits de chaleur (31 et 33) placés sensiblement à égale distance de chaque côté du capteur (29) dans des directions sensiblement perpendiculaires à la ligne d'écoulement du fluide.

7. Méthode selon l'une quelconque des revendications 1 à 5, caractérisée en ce que le dispositif comprend : un capteur de référence (37) et un capteur actif (35) placés chacun dans le fluide en écoulement, les capteurs (37 et 35) pouvant produire un flux thermique lorsqu'ils sont alimentés en courant électrique, ces capteurs (37 et 35) étant placés à distance l'un de l'autre dans une direction essentiellement perpendiculaire à la ligne d'écoulement du fluide, en ce qu'elle comporte trois puits de chaleur (39, 41 et 43) dont l'un (41) est placé entre les capteurs (37 et 35), un autre de ces puits de chaleur (43) étant placé du côté opposé au capteur actif (37) et le troisième puits thermique (39) étant placé du côté opposé au capteur de référence (35), chaque puits de chaleur (39, 41 et 43) étant placé essentiellement à la même distance du capteur voisin (37 ou 35) dans des directions essentiellement perpendiculaires à la ligne d'écoulement du fluide, en ce qu'un courant électrique est fourni au capteur actif (35) pour faire s'écouler un flux thermique du capteur actif (35) aux puits de chaleur (39 et 41) de chaque côté du capteur actif (35), en ce qu'un courant électrique est fourni au capteur de référence (35) à un niveau sensiblement inférieur au courant fourni au capteur actif (35) pour faire s'écouler du capteur de référence (37) aux puits thermiques (41 et 43) de chaque côté du capteur de référence (37), en ce que les températures du capteur actif (35) et du capteur de référence (37) sont mesurées, la température du capteur de référence (37) étant soustraite de celle du capteur actif (35) et en ce que la vitesse du fluide en écoulement est calculée d'après la différence de température et le courant fourni au capteur actif.

8. Débitmètre à flux thermique convenant pour l'emploi dans la méthode selon la revendication 7 et comprenant :
a) un capteur de référence (37) et un capteur actif (35), chacun étant adapté pour se placer dans le fluide en écoulement, les capteurs (37 et 35) pouvant produire un flux thermique lorsqu'ils sont alimentés par un courant électrique, ces capteurs (37 et 35) étant disposés à l'écart l'un de l'autre dans une direction essentiellement perpendiculaire à la ligne d'écoulement prévue du fluide,
b) trois puits de chaleur (39, 41 et 43) dont l'un (41) est placé entre les capteurs (37 et 35), un autre des puits de chaleur (43) étant placé du côté opposé au capteur de référence (37), et le troisième puits de chaleur (39) étant placé du côté opposé au capteur actif (35), chaque puits de chaleur (39, 41 et 43) étant disposé sensiblement à la même distance du capteur voisin (37 ou 35) dans des directions sensiblement perpendiculaires à la ligne d'écoulement prévue du fluide, les distances entre le capteur actif (35) et les puits de chaleur adjoints (41 et 49) étant choisies de façon que le flux thermique produit par le capteur actif (35) s'écoule essentiellement sans obstacles du capteur actif (35) aux puits de chaleur adjoints (41 et 39) et perpendiculairement à la ligne d'écoulement prévue du fluide et qu'il soit modulé par l'écoulement du fluide,
c) des moyens pour fournir du courant électrique au capteur actif (35) afin de faire s'écouler un flux thermique du capteur actif (35) aux puits de chaleur (39 et 41) de chaque côté du capteur actif (35) et de fournir du courant électrique au capteur de référence (37) à un niveau sensiblement inférieur à celui du courant fourni au capteur actif (35) pour faire s'écouler un flux thermique du capteur de référence (37) aux puits de chaleur (41 et 43) de chaque côté du capteur de référence (37), et
d) des moyens pour mesurer les températures du capteur actif (35) et du capteur de référence (37) d'après celle du capteur actif (35), des moyens pour mesurer le courant fourni au capteur actif et des moyens pour calculer la vitesse du fluide en écoulement d'après la différence de température et le courant fourni au capteur actif.
